# EUROPEAN PATENT SPECIFICATION

(11) **EP 0 379 025 B1**
(45) Date of publication and mention of the grant of the patent: **27.10.1993**
(21) Application number: 90100315.2
(22) Date of filing: 08.01.1990
(51) Int. Cl.: G01N 1/00, F27B 17/02, F27D 23/02

(54) **Combustion furnace for burning sample to be analyzed**
Verbrennungsofen für eine zu analysierende Probe
Four de combustion pour brûler un échantillon à des fins d'analyse

(30) Priority: 14.01.1989 JP 2976/89 U
(43) Date of publication of application: 25.07.1990
(73) Proprietor: HORIBA, LTD., Minami-ku Kyoto (JP)
(72) Inventor: Tanimoto, Masahiro, Fushimi-ku, Kyoto (JP)
(74) Representative: TER MEER STEINMEISTER & PARTNER GbR

(56) References cited:
- DE-A- 3 125 983
- US-A- 3 739 067
- US-A- 4 161 883
- US-A- 4 497 214

## Description

The present invention relates to a combustion furnace in which a sample to be analyzed can be burnt in order to extract and analyze ingredients thereof.

A conventional furnace of this type is provided with a cylindrical filter for removing dusts generated in the combustion of the sample. However, in many cases a considerably large amount of dust is generated and deposited on the furnace walls and the filter when the sample is burnt. An even larger amount of dust is generated when various kinds of assistant burning agents such as tungsten or tin are added in order to promote the extraction of the ingredients from the sample by combustion.

If the quantity of dust generated in the combustion process and deposited on the filter and the like is increased, problems occur in that, for example, the filtration efficiency of the filter is lowered and the extracted ingredients are adsorbed by the dust so that the accuracy of the analysis is deteriorated.

In view of this problem, a known combustion furnace for burning a sample to be analyzed is provided with a device for removing the dusts adhering to the inner surfaces of the filter and the furnace. An example of a conventional combustion furnace of this type will be described below with reference to Fig. 3 with reference to US-A- 4 234 541 on which the preamble of claim 1 is based.

A combustion cylinder 32 is provided in the interior of a furnace body 31, and a heater member 33 forming part of a high frequency heating system or the like is arranged on a peripheral portion of the combustion cylinder 32. A crucible 34 for accommodating the sample therein is removably placed on a holding member 35 so that it can be taken out of the furnace body 31. A cylindrical filter 36 is provided in the interior of the furnace body 31 and is arranged to be in fluid-communication with the combustion cylinder 32. A cleaning rod 37 serving also as a lance is mounted coaxially in said filter 36 and said combustion cylinder 32 and is reciprocally slidable and rotatable about its longitudinal axis within said filter 36 and said combustion cylinder 32. A brush 38 for cleaning the inner surfaces of the filter 36 and the combustion cylinder 32 is mounted on an end portion of the cleaning rod 37.

The furnace body 31 is provided with a port 39 for taking out the gas to be analyzed. A heating member 40 is provided for heating the filter 36.

With this combustion furnace, the crucible 34 containing the sample is inserted into the combustion cylinder 32, and the combustion cylinder is heated by means of the heating member 33 so as to burn the sample. The gas to be analyzed which is generated in the combustion process is passed through the filter 36 and supplied to an analyzer (not shown) through a take-out line connected to the port 39. During the combustion of the sample, the brush 38 is located in an upper portion of the interior of the combustion cylinder 32. The dusts generated in the combustion process are deposited on the inner surface of the combustion cylinder and on and within the filter 36.

These dusts are removed by means of the brush 38 mounted on the end portion of the cleaning rod 37 by reciprocally sliding and rotating the cleaning rod 37 manually or by the use of a motive power (of a motor or the like).

This process of removing the dusts from the filter and the combustion cylinder requires considerable labor and necessitates a complicate construction of the combustion furnace. In addition, since merely the inner circumferential surface of the filter 36 is rubbed with the brush 38, it is difficult to remove for example the dusts retained inside of a filament layer forming the filter 36. Accordingly, a part of the dust is likely to be left within the filter. Furthermore, since the activity of the surface of the filter 36 changes when the filter is cleaned by means of an ordinary brush, waste analyses become inevitable, so that the required number of analyses is increased by a factor of 2 or 3.

Further, since the brush 38 is always located within the combustion chamber 32, problems occur in that, for example, the inside of the furnace has a complicated construction and obstructs the flow of the gas.

It is an object of the present invention to overcome the above described problems and to provide a combustion furnace which has a simple construction and permits to easily and effectively remove the dusts adhering to the filter and other components of the combustion furnace.

According to the invention, this object is achieved by a combustion furnace having the features specified in the claims.

In a preferred embodiment of the invention, a cleaning gas supply line is connected to a gas port provided in the furnace body in a position adjacent to an outer circumferential portion of the filter, and a cleaning gas is supplied under pressure into the interior of the furnace body through said cleaning gas supply line in order to remove dusts from the filter and other components of the combustion furnace.

Said gas port can also be used for taking out the gas to be analyzed from the interior of the furnace body. In this case, the cleaning gas supply line is connected to a portion of the take-out line for the gas to be analyzed by means of a switch-over valve. Alternatively, separate ports can be provided for taking out the gas to be analyzed and for supplying the cleaning gas into the furnace body.

With this combustion furnace, the sample is burnt in the combustion cylinder, and the gas to be analyzed is passed through the filter and is supplied to an analyzer. In order to remove the dusts retained by the filter and the dusts adhered to the combustion cylinder or other component members present in the interior of the furnace body, the cleaning gas, e.g. O₂, is supplied under pressure into the furnace body through the cleaning gas supply line. Since the cleaning gas is passed under pressure through the filter from its outer surface to its interior, the cleaning gas is effective to separate and remove the dusts retained within the filter layer and on the internal surface of the filter. Further, the dusts adhered to the inner surface of the combustion cylinder and the like are also removed by the cleaning gas. The cleaning gas can be supplied continuously or intermittently. If it is supplied intermittently, the fluctuations of the pressure of the cleaning gas enhance the dust-removing effect.

Preferred embodiments of the invention will be described below in conjunction with the drawings in which:
- Fig. 1: is a sectional view showing a preferred embodiment of a combustion furnace according to the invention;
- Fig. 2: is a partially sectioned front view showing an other preferred embodiment of the present invention; and

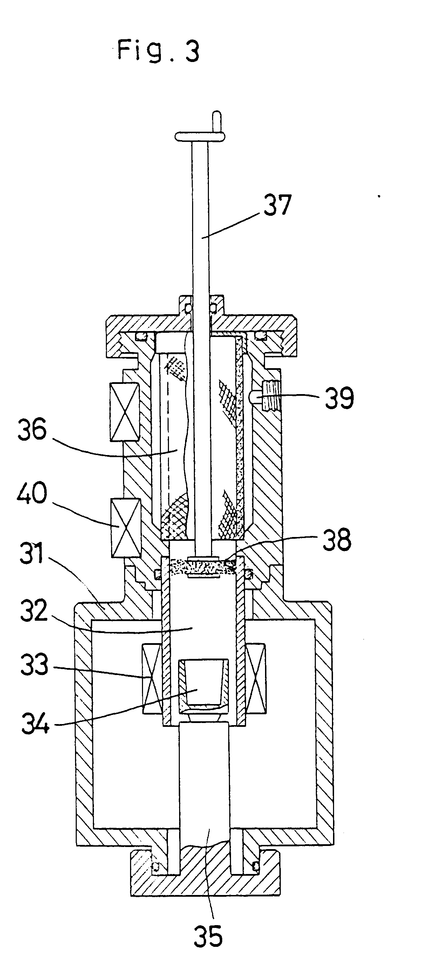

- Fig. 3: is sectional view showing a conventional combustion furnace.

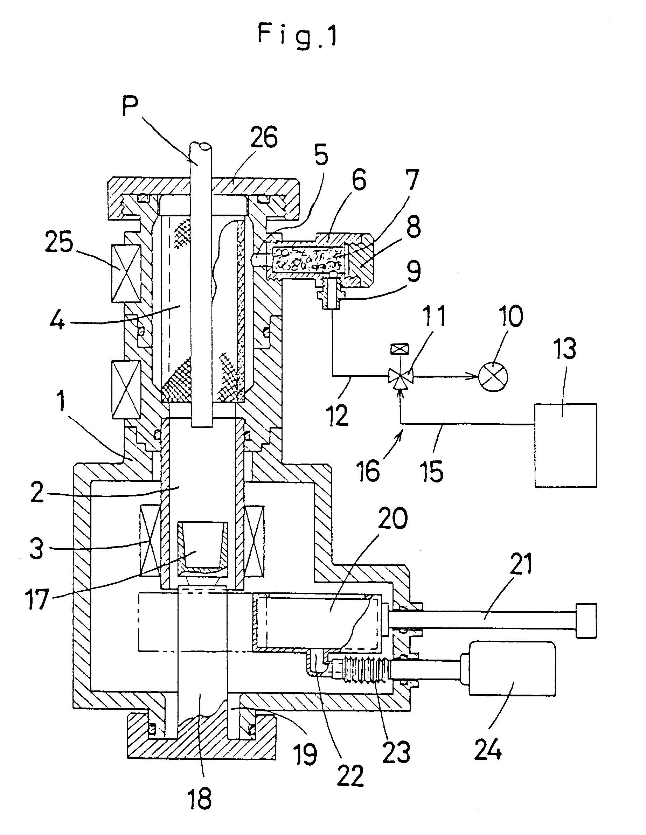

In the embodiment shown in Figure 1, a common gas port is used for taking out the gas to be analyzed and for supplying a cleaning gas.

A combustion cylinder 2 is provided within a furnace body 1 of the combustion furnace, and a heating member 3 forming part of a high-frequency heating device or the like is arranged on an outer circumference of the combustion cylinder 2. A cylindrical filter 4 is disposed on a downstream side of the combustion cylinder 2 and is held in fluid communication therewith. A gas port 5 for taking out a gas to be analyzed is formed in the furnace body 1 in a position opposite to an outer circumferential portion of the filter 4. A filter case 6 is mounted on the furnace body 1 so as to communicate with said gas port 5. The filter case 6 is filled with quartz wool or the like to form a subfilter 7. The filter case 6 is provided with a cover 8 and is connected with a connection pipe 9 which communicates the interior of the filter case 6 to an analyzer 10 via a piping 12 and a three-way valve 11.

A cleaning gas tank 13 contains a cleaning gas such as O₂ used for cleaning the filter 4. The cleaning gas tank 13 is connected with the three-way change-over valve 11 through a cleaning pipe 15, so that a cleaning gas supply line 16 is established.

A sample crucible 17 is mounted on an end portion of a holding member 18 and is inserted into the interior of the combustion cylinder 2 through an insertion port 19 formed in the furnace body 1. A dust receptor 20 is disposed within the furnace body 1 for collecting dusts falling down from the combustion cylinder 2. The dust receptor 20 is mounted to an end portion of a guide rod 21 which is slidably projected out of the furnace body 1, so that, by sliding said guide rod 21, the dust receptor 20 can be moved from a position below the combustion chamber 2 (shown by phantom lines in Fig. 1) to a position laterally offset from the combustion cylinder 2 for allowing the insertion of the crucible 17 into the combustion cylinder. A dust-exhausting port 22 is formed in a bottom portion of the dust receptor 20 and is connected through a flexible suction hose 23 having for example a bellow-like shape with a suction device 24 such as a vacuum cleaner, so that the dusts may be withdrawn from the dust receptor 20 into the suction device 24.

A heating member 25 is mounted on the furnace body 1 in a position adjacent to a circumferential portion of the filter 4 for heating the filter, thereby preventing adsorption of the gas to be analyzed. The furnace body 1 is covered by a cover 26 and is provided with a lance P.

When a sample is to be burnt in the combustion furnace having the above described construction, the cleaning pipe 15 is disconnected from the piping 12 by means of the three-way change-over valve 11, the holding member 18 is withdrawn out of the furnace body 1 and the sample and, if necessary, an assistant combustion agent are put into the crucible 17. The crucible 17 is then inserted into the combustion cylinder 2 and is heated by means of the heating member 3 so that the sample is burnt. The gas generated in the combustion of the sample is passed through the filter 4 and the subfilter 7 and is introduced through the piping 12 into the analyzer 10 and is analyzed therein. In order to remove the dusts generated in the combustion of the sample and adhering to the inner surface of the combustion cylinder 2 and to the filter 4 after the completion of the combustion of the sample, the three-way change-over valve 11 is switched over to disconnect the piping 12 from the analyzer 10 and connect it with the cleaning pipe 15. The crucible 17 is removed together with the holding member 18 and the guide rod 21 is pushed inwardly to position the dust receptor below the combustion cylinder 2, as is shown by an imaginary line in Fig. 1.

The cleaning gas is supplied under pressure from the cleaning gas tank 13 into the furnace body 1 through the cleaning pipe 15, the piping 12, the subfilter 7 and the gas port 5.

Since the cleaning gas supplied to the furnace body 1 is forced under pressure through the filter 4, the dusts retained by the filter are separated from the filter and fall into the dust receptor 20. The pressurized cleaning gas that has passed through the filter 4 is further passed through the combustion cylinder 2 so that the dust adhering to the walls of the combustion cylinder are also removed. When the suction device 24 is operated, the dusts which have been collected in the dust receptor 20 are sucked into the suction device 24 through the suction hose 23.

If the three-way change-over valve 11 is changed over in short intervals of for example 0.3 to 0.5 s, a fluctuation of the pressure of the cleaning gas supplied into the furnace body 1 is produced, and the filter 4 is vibrated by this fluctuation of pressure, so that the dusts retained by the filter 4 can be removed from the filter more effectively.

Since the cleaning gas, such as O₂, is passed through the filament layer of the filter 4 from the outer circumferential surface to the interior of the filter, i.e. in a direction opposite to the flow of the gas to be analyzed, not only the dusts adhered to the internal surface of the cylindrical filter 4 can be almost completely removed, but also the dusts retained inside of the filament layer forming the filter can be removed effectively.

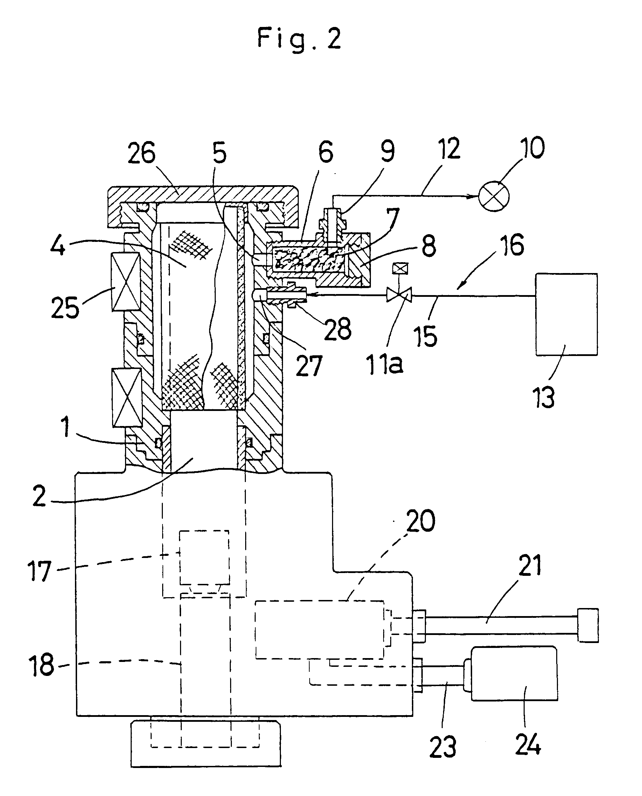

Fig. 2 shows the principal parts of another preferred embodiment of the combustion furnace, in which separate gas ports are provided for taking out the gas to be analyzed and for supplying the cleaning gas.

In Fig. 2, a gas port 27 for supplying the cleaning gas is formed in the furnace body 1, and the cleaning gas supply line 16 connectng the cleaning gas tank 13 to the gas port 27 comprises the cleaning pipe 15, a closing valve 11a and a connection pipe 28 connecting the closing valve 11a to the gas port 27. The analyzer 10 is connected to the separate gas port 5 via the piping 12, the connection pipe 9 and the filter case 6.

The other component members of the combustion furnace according to figure 2 correspond to those described above in conjunction with figure 1.

In the embodiment shown in Fig. 2, the gas to be analyzed is supplied to the analyer 10 from the gas port 5 through the piping 12. In order to remove the dusts from the filter 4, a pump 14 is operated, and the cleaning gas is caused to flow under pressure from the cleaning gas tank 13 into the interior of the furnace body 1 through the gas port 27. Fluctuations of the pressure of the cleaning gas supplied into the furnace body 1 can be produced by opening and closing the valve 11a.

In the combustion furnaces described above, the filter 4 is cleaned by passing a cleaning gas under pressure through the interior of the furnace body 1. The cleaning gas is introduced into the furnace body through a gas port opposing the outer circumferential surface of the cylindrical filter, so that the cleaning gas is forced through the filter layer into the interior of the cylindrical filter.

Accordingly, not only the dusts deposited on the surface of the filter can be removed almost completely, but also the dusts retainined inside of the filament layer of the filter can be removed, so that almost the whole quantity of dust retained by the filter can be removed. Thus, the reduction of accuracy of analysis due to adsorption of the gas to be analyzed by dust left in the filter can be prevented.

In addition, since the flow of the gas to be analyzed through the combustion cylinder and the filter is not obstructed by any cleaning members present in the interior of the furnace body, the gas to be analyzed can be passed smoothly to the analyzer, and the maintenance of the combustion furnace is facilitated.

## Claims

1. A combustion furnace for burning a sample to be analyzed, comprising:
- a furnace body (1),
- means (3) for burning a sample within said furnace body, thereby to generate a gas to be analyzed,
- a filter (4) provided within said furnace body,
- means (5) for taking out said gas to be analyzed through said filter (4), and
- cleaning means (13,16;27) for removing dusts from said filter,
characterized in that said cleaning means comprise a cleaning gas supply line (16) connected to a gas port (5;27) of said furnace body (1) for passing a cleaning gas under pressure through the interior of the furnace body.

2. A combustion furnace as set forth in claim 1, wherein the cleaning gas is passed through said filter (4) in a direction opposite to the direction of flow of the gas to be analyzed.

3. A combustion furnace as set forth in claim 1 or 2, wherein a combustion cylinder (2) is provided for burning the sample therein, said filter (4) has a cylindrical shape and is arranged to communicate with said combustion cylinder (2), and said gas port (5;27) for supplying the cleaning gas is positioned at an outer circumferential portion of said filter (4).

4. A combustion furnace as set forth in claim 3, wherein said cylindrical filter (4) and said combustion cylinder (2) are arranged coaxially with each other in vertical direction, the filter (4) being positioned above said combustion cylinder (2), and wherein a dust receptor (20) is displaceably mounted below the lower end of the combustion cylinder (2).

5. A combustion furnace as set forth in claim 4, wherein said dust receptor (20) is slidable by means of a rod (21) projecting out of said furnace body (1).

6. A combustion furnace as set forth in claim 4 or 5, wherein the dust collector (20) is provided with a dust-exhausting port (22) connected to a suction device (24) through a flexible suction line (23).

7. A combustion furnace as set forth in any of the preceding claims, wherein said cleaning gas supply line (16) comprises valve means (11;11a) for causing fluctuations in the pressure of the cleaning gas supplied to the furnace body.

8. A cumbustion furnace as set forth in any of the preceding claims, wherein a single gas port (5) is provided for taking out the gas to be analyzed and for supplying the cleaning gas.

9. A cumbustion furnace as set forth in claims 7 and 8, wherein said valve means (11) comprise a three-way change-over valve for selectively connecting said gas port (5) to a cleaning gas source (13) and to an analyzer (10).

10. A combustion furnace as set forth in any of the claims 1 to 7, wherein the furnace body (1) comprises a first gas port (5) for taking out the gas to be analyzed and a second gas port (27) for supplying said cleaning gas.

## Patentansprüche

1. Ein Verbrennungsofen zur Verbrennung einer zu analysierenden Probe, mit:
- einem Ofenkörper (1),
- Mitteln (3) zur Verbrennung einer Probe innerhalb des Ofenkörpers, um dadurch ein zu analysierendes Gas zu erzeugen,
- einem innerhalb des Ofenkörpers vorgesehenen Filter (4),
- Mitteln (5) zur Entnahme des zu analysierenden Gases durch den Filter (4), und
- Reinigungsmitteln (13,16;27) zur Entfernung von Stäuben aus dem Filter,
dadurch gekennzeichnet, daß die Reinigungsmittel eine Reinigungsgas-Versorgungsleitung (16) umfassen, die mit einer Gasöffnung (5;27) des Ofenkörpers (1) verbunden ist, um eine Reinigungsgas unter Druck durch das Innere des Ofenkörpers zu leiten.

2. Verbrennungsofen nach Anspruch 1, in dem das Reinigungsgas in einer Richtung entgegen der Flußrichtung des zu analysierenden Gases durch den Filter (4) geleitet wird.

3. Verbrennungsofen nach Anspruch 1 oder 2, in dem ein Verbrennungszylinder (2) zur Verbrennung einer Probe darin vorgesehen ist, der Filter (4) eine zylindrische Form hat und so angeordnet ist, daß er mit dem Verbrennungszylinder (2) in Verbindung steht, und die Gasöffnung (5;27), zur Zuführung des Reinigungsgases an einem äußeren Umfangsteil des Filters (4) positioniert ist.

4. Verbrennungsofen nach Anspruch 3, in dem der zylindrische Filter (4) und der Verbrennungszylinder (2) zueinander koaxial in vertikaler Richtung angeordnet sind, wobei der Filter (4) über dem Verbrennungszylinder (2) angeordnet ist, und in dem ein Staubauffänger (20) bewegbar unter dem unteren Ende des Verbrennungszylinders (2) montiert ist.

5. Verbrennungsofen nach Anspruch 4, in dem der Staubauffänger (20) mittels eines aus dem Ofenkörper (1) herausragenden Stabes (21) verschiebbar ist.

6. Verbrennungsofen nach Anspruch 4 oder 5, in dem der Staubauffänger (20) mit einer Staubablaßöffnung (22) versehen ist, die durch eine flexible Saugleitung (23) mit einer Saugvorrichtung (24) verbunden ist.

7. Verbrennungsofen nach irgendeinem der vorhergehenden Ansprüche, in dem die Reinigungsgas-Versorgungsleitung (16) Ventilmittel (11;11a) zur Verursachung von Schwankungen im Druck des zum Ofenkörper zugeführten Reinigungsgases umfaßt.

8. Verbrennungsofen nach irgendeinem der vorhergehenden Ansprüche, in dem eine einzige Gasöffnung (5) zur Entnahme des zu analysierenden Gases und zur Zuführung des Reinigungsgases vorgesehen ist.

9. Verbrennungsofen nach den Ansprüchen 7 und 8, in dem besagte Ventilmittel (11) ein Dreiwege-Umschaltventil zur wahlweisen Verbindung der Gasöffnung (5) mit einer Reinigungsgasquelle (13) und einem Analysator (10) umfassen.

10. Verbrennungsofen nach irgendeinem der Ansprüche 1 bis 7, in dem der Ofenkörper (1) eine erste Gasöffnung (5) zur Entnahme des zu analysierenden Gases und eine zweite Gasöffnung (27) zur Zuführung des Reinigungsgases aufweist.

## Revendications

1. Four de combustion pour brûler un échantillon à analyser, comprenant:
- un corps de four (1),
- des moyens (3) pour brûler un échantillon à l'intérieur dudit corps de four, et ainsi générer un gaz à analyser,
- un filtre (4) prévu à l'intérieur dudit corps de four,
- des moyens (5) pour extraire ledit gaz à analyser à travers ledit filtre (4), et
- des moyens de nettoyage (13, 16, 27) pour enlever les poussières dudit filtre,
caractérisé en ce que lesdits moyens de nettoyage comprennent une conduite d'alimentation en gaz de nettoyage (16) connectée à un orifice de gaz (5, 27) dudit corps de four (1), pour faire passer un gaz de nettoyage sous pression à travers l'intérieur du corps de four.

2. Four de combustion tel qu'exposé dans la revendication 1, dans lequel le gaz de nettoyage passe à travers ledit filtre (4) dans la direction opposée à la direction de l'écoulement du gaz à analyser.

3. Four de combustion tel qu'exposé dans les revendications 1 ou 2, dans lequel un cylindre de combustion (2) est prévu pour y brûler l'échantillon, ledit filtre (4) a une forme cylindrique et est disposé de façon à communiquer avec ledit cylindre de combustion (2), et ledit orifice de gaz (5, 27) pour l'alimentation en gaz de nettoyage est positionné sur une partie circonférentielle extérieure dudit filtre (4).

4. Four de combustion tel qu'exposé dans la revendication 3, dans lequel ledit filtre cylindrique (4) et ledit cylindre de combustion (2) sont disposés de façon coaxiale l'un par apport à l'autre dans une direction verticale, le filtre (4) étant positionné au dessus dudit cylindre de combustion (2), et dans lequel un récepteur de poussière (20) est monté de façon amovible en dessous de l'extrémité inférieure du cylindre de combustion (2).

5. Four de combustion tel qu'exposé dans la revendication 4, dans lequel ledit récepteur de poussière (20) est coulissable au moyen d'une barre (21) s'étendant en dehors dudit corps de four (1).

6. Four de combustion tel qu'exposé dans les revendications 4 ou 5, dans lequel le collecteur de poussière (20) est pourvu d'un orifice d'extraction de poussière (22) connecté à un dispositif d'aspiration (24) par l'intermédiaire d'une conduite flexible d'aspiration (23).

7. Four de combustion tel qu'exposé dans l'une quelconque des revendications précédentes, dans lequel ladite conduite d'alimentation en gaz de nettoyage (16) comporte des moyens formant soupapes (11, 11a) pour provoquer des fluctuations de presion du gaz de nettoyage fourni au corps de four.

8. Four de combustion tel qu'exposé dans l'une quelconque des revendications précédentes, dans lequel un unique orifice de gaz (5) est prévu pour extraire le gaz à analyser et pour fournir le gaz de nettoyage.

9. Four de combustion tel qu'exposé dans les revendications 7 et 8, dans lequel lesdits moyens formant soupapes (11) comprennent une soupape de commutation à trois voies pour connecter de façon sélective ledit orifice de gaz (5) à une source de gaz de nettoyage (13) et à un analyseur (10).

10. Four de combustion tel qu'exposé dans l'une quelconque des revendications 1 à 7, dans lequel le corps de four (1) comprend un premier orifice de gaz (5) pour extraire le gaz à analyser, et un second orifice de gaz (27) pour fournir ledit gaz de nettoyage.
